# EUROPÄISCHE PATENTANMELDUNG

(11) **EP 2 236 855 A2**
(43) Veröffentlichungstag der Anmeldung: **06.10.2010**
(21) Anmeldenummer: 10155570.4
(22) Anmeldetag: 05.03.2010
(51) Int. Cl.: F16F 15/04

(54) **Vorrichtung zur Beeinflussung der Körperschallleitung und der Geräuschabstrahlungen an einem Kraftfahrzeugantriebsstrang**

(30) Priorität: 03.04.2009 DE 102009002180
(71) Anmelder: ZF Friedrichshafen AG, 88038 Friedrichshafen (DE)
(72) Erfinder: Heinzelmann, Karl-Fritz, 88074, Meckenbeuren (DE); Rüchardt, Christoph, 88131, Bodolz (DE); Richter, Monika, 88693, Deggenhausertal (DE); Gross, Volker, 88045, Friedrichshafen (DE); Mors, Axel, 88045, Friedrichshafen (DE)

(57) **Zusammenfassung**

Die Erfindung betrifft eine Vorrichtung zur Beeinflussung der Körperschallleitungen und der Geräuschabstrahlungen an einem Antriebsstrang mit einer Brennkraftmaschine sowie mit einem damit verschraubten Getriebe, bei denen in einem Anlagebereich zwischen Motorblock (1) und Getriebegehäuse (4, 4a) ein Distanzkörper angeordnet ist. Zur Verbesserung bekannter Vorrichtungen ist vorgesehen, dass der Distanzkörper als Impedanzring (3, 3a) mit tragender Funktion ausgebildet ist, wobei der Impedanzring (3, 3a) aus einem Material besteht, das gegenüber dem Material des Motorblocks (1) und/oder des Getriebegehäuse (4, 4a) einen großen Impedanzunterschied aufweist.

## Beschreibung

Die Erfindung betrifft eine Vorrichtung zur Beeinflussung der Körperschallleitungen und der Geräuschabstrahlungen an einem Antriebsstrang mit einer Brennkraftmaschine sowie mit einem damit verschraubten Getriebe, bei denen in einem Anlagebereich zwischen Motorblock und Getriebegehäuse ein Distanzkörper angeordnet ist.

Eine derartige Vorrichtung ist in der DE 198 26 175 A1 beschrieben. Bei dieser Vorrichtung handelt es sich bei dem Distanzkörper um einen in seiner Geometrie steuerbar beeinflussbaren Distanzkörper, beispielsweise einer aktiven Dichtung, in der ein oder mehrere Piezoelemente angeordnet sind. Die unter Zwischenlage des Distanzkörpers miteinander verbundenen Bauteile sollen gemäß dieser Druckschrift bezüglich der Leitung des Körperschalls eine unterschiedliche akustische Impedanz aufweisen. Das Verhältnis der Impedanzen der beiden Bauteile zueinander soll kleiner als 1 : 2, bevorzugt kleiner als 1 : 5 und besonders bevorzugt kleiner als 1 : 10 sein. Dies soll den besonderen Vorteil mit sich bringen, dass das härtere Bauteil für die Piezoelemente in der Art einer scheinbar festen Auflage einen scheinbaren Fixpunkt darstellt - also sich daran quasi abstützen kann -, wodurch das weichere Bauteil in einfacher und energiesparender Weise zu gewollten Schwingungen erregt werden kann.

Abgesehen davon, dass ein Motorblock und ein damit verschraubtes Getriebegehäuse in der Regel aus dem gleichen Material hergestellt sind und dementsprechend keine sehr große unterschiedliche akustische Impedanz aufweisen, ist die Anordnung eines aktiven, als hinsichtlich seiner Eigenschaften steuerbaren Distanzkörpers zwischen den beiden Bauteilen hinsichtlich des Bauaufwandes und der Steuerung aufwendig sowie kostenträchtig.

Ausgehend von diesem Stand der Technik liegt der Erfindung die Aufgabe zugrunde, eine Vorrichtung zur Beeinflussen der Körperschallleitung und der Geräuschabstrahlung vorzuschlagen, die einfach aufgebaut und akustisch wirksam ist, sowie die mechanische Festigkeit der Verbindung zwischen einem Motorblock und einem Getriebegehäuse ohne zusätzliche Einrichtungen gewährleistet.

Ausgehend von einer Vorrichtung zur Beeinflussung der Körperschallleitungen und der Geräuschabstrahlungen an einem Antriebsstrang mit einer Brennkraftmaschine sowie mit einem damit verschraubten Getriebe, bei denen in einem Anlagebereich zwischen Motorblock und Getriebegehäuse ein Distanzkörper angeordnet ist wird erfindungsgemäß vorgeschlagen, dass der Distanzkörper als Impedanzring mit tragender Funktion ausgebildet ist, wobei der Impedanzring aus einem Material besteht, das gegenüber dem Material des Motorblocks und/oder des Getriebegehäuse einen großen Impedanzunterschied aufweist.

Die Erfindung geht von der Überlegung aus, dass bei Materialien mit einem großen Impedanzunterschied der größte Teil der Schallenergie an der jeweiligen Grenzfläche reflektiert wird, während es bei geringem Impedanzunterschied zur Transmission der Schallwellen kommt. Da nun Motorblöcke und Getriebegehäuse aus Gründen der Gewichtsersparnis inzwischen überwiegend aus Leichtmetalllegierungen hergestellt werden, die eine verhältnismäßig niedrige akustische Impedanz aufweisen, kann der Impedanzring aus einem Schwermetall bestehen, das mindest dieselben Festigkeitseigenschaften wie das Material des Motorblocks und/oder des Getriebegehäuses aufweist, um eine tragende Funktion im Verbindungsbereich der Gehäuse dieser beiden Antriebsaggregate übernehmen zu können.

Vorzugsweise kann der Impedanzring aus Stahl oder Grauguss bestehen, wenn der Motorblock und/oder das Getriebegehäuse aus einer Aluminiumlegierung bestehen.

Wenn der Impedanzring aus einem Schwermetall und der Motorblock und/oder das Getriebegehäuse aus einer Leichtmetalllegierung bestehen, erfolgt die Reflexion der vom Motorblock ausgehenden Schallwellen an der Grenzfläche zwischen dem Motorblock und dem Impedanzring. Eine Weiterleitung der Schallwellen in Richtung zur Getriebegehäuseglocke und zum eigentlichen Getriebegehäuse unterbleibt weitgehend, so dass letztlich eine geringere Geräuschabstrahlung des Antriebstanges im Betrieb erfolgt.

Wenn der Impedanzring beispielsweise aus einem Faserverbundwerkstoff wie GFK oder CFK besteht, dessen akustische Impedanz niedriger als die der Gussmetalle für den Motorblock und/oder dem Getriebegehäuse ist, werden die Schallwellen im Wesentlichen an der Grenzfläche zwischen dem Impedanzring und dem Getriebegehäuse reflektiert, so dass auch in diesem Fall eine Übertragung der von der Brennkraftmaschine ausgehenden Schallwellen auf das Getriebegehäuse wesentlich herabgesetzt wird.

Ähnliches gilt für einen Impedanzring in Sandwichbauweise aus einer Abfolge von Schichten aus unterschiedlichen Materialien, insbesondere aus einer Abfolge von Schichten aus Stahl und einem Faserverbundwerkstoff wie GFK oder CFK.

Im Rahmen der Erfindung ist es möglich, verschiedene Parameter, die den Schallübergang vom Motor zum Getriebe beeinflussen, zu variieren. So kann der Impedanzring aus einem Material mit höherer oder niedrigerer Dichte im Vergleich zum Motorblock oder dem Getriebegehäuse bestehen. Dabei ist die Schallwellengeschwindigkeit in diesen Materialien mit zu berücksichtigen, da die akustische Impedanz als das Produkt aus der Dichte und der Schallwellengeschwindigkeit des jeweiligen Materials definiert ist.

Auch die Masse des Impedanzrings spielt eine Rolle, so dass sich diese durch Veränderung der axialen und radialen Ausdehnung des Impedanzrings verändern lässt. Auch die Steifigkeit des Impedanzrings hat einen Einfluss auf die akustische Impedanz, so dass die Auswahl eines Materials mit entsprechendem Elastizitätsmodul einen Einfluss auf die Schallübertragung vom Motor zum Getriebe hat.

Es ist daher in einer besonders vorteilhaften Weiterbildung der Erfindung vorgesehen, dass die axiale und/oder radiale Ausdehnung sowie das Elastizitätsmodul des Impedanzrings an das im Betrieb akustisch wahrnehmbare Schwingungsspektrum des jeweils verwendeten Motorblocks in der Weise angepasst ist, dass eine möglichst geringe Weiterleitung dieser Schwingungen in Richtung zum Getriebegehäuse erfolgt.

Die Erfindung wird nachstehend anhand zweier in der Zeichnung dargestellter Ausführungsbeispiele weiter erläutert. In der Zeichnung zeigt
- Fig. 1: eine schematische Schnittdarstellung einer Anordnung eines Impedanzrings zwischen einem Motorblock und einem Getriebegehäuse, und
- Fig. 2: eine schematische, vergrößerte Schnittansicht eines Impedanzrings in Sandwichbauweise bei seiner Anordnung zwischen einem Motorblock und einem Getriebegehäuse.

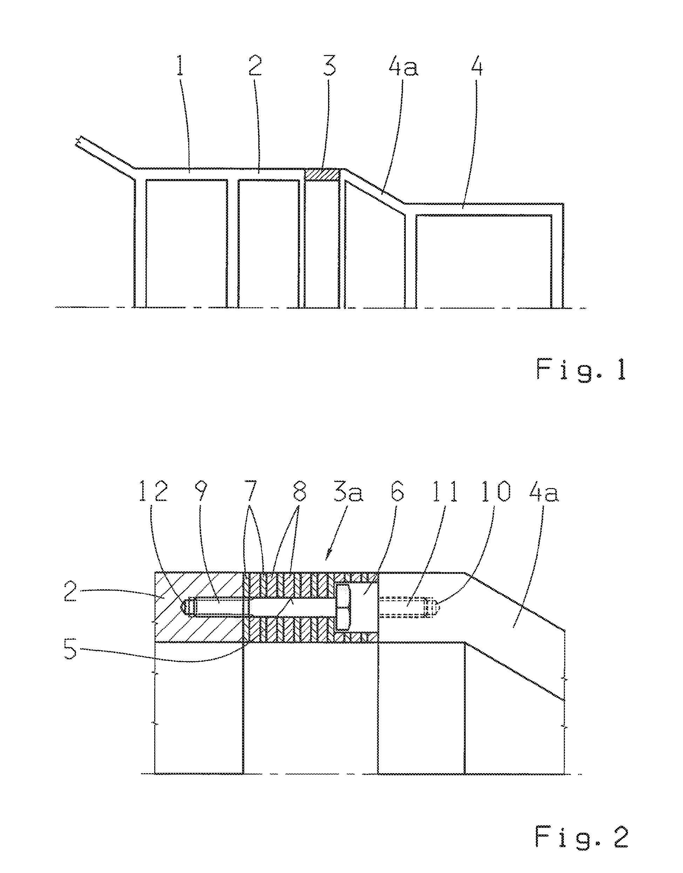

Demnach zeigt Fig. 1 einen nur schematisch dargestellten Motorblock 1 mit einem Schwungradgehäuse 2, das über einen Impedanzring 3 mit einer Getriebeglocke 4a eines Getriebegehäuses 4 verbunden ist.

Der Motorblock 1, das Schwungradgehäuse 2 und das Getriebegehäuse 4, 4a bestehen aus einer Leichtmetalllegierung, insbesondere einer Aluminiumlegierung, mit einer akustischen Impedanz von 17,0 x 10⁵ g/cm²s, während der Impedanzring 3 aus Stahl mit einer akustischen Impedanz von 46,0 x 10⁵ g/cm²s besteht. Der Impedanzring 3 ist so gestaltet, dass er sich einerseits mit dem Schwungradgehäuse 2 und andererseits auch mit dem Getriebegehäuse 4 bzw. dessen Getriebeglocke 4a verschrauben lässt, wobei diese Verschraubung vorzugsweise nicht mittels Durchgangsschrauben vom Schwungradgehäuse 2 zum Getriebegehäuse 4 bzw. Getriebeglocke 4a erfolgt. Vielmehr erfolgt eine Verschraubung einerseits zwischen dem Schwungradgehäuse 2 und dem Impedanzring 3 sowie andererseits zwischen dem Impedanzring 3 und dem Getriebegehäuse 4 bzw. dessen Getriebeglocke 4a.

In Fig. 2 ist in einem Ausführungsbeispiel ein Impedanzring 3a in Sandwichbauweise dargestellt. Dieser Impedanzring 3a besteht abwechselnd aus Stahlschichten 7 bzw. Stahlblechen und damit in geeigneter Weise, beispielsweise durch Kleben, fest verbundenen GFK-Schichten oder CFK-Schichten 8. Dieser aus einem Metall 7 und einem Faserverbundwerkstoff 8 aufgebaute Impedanzring 3a hat deutlich besser Eigenschaften hinsichtlich der Vermeidung von Körperschallleitung und Geräuschabstrahlung als der Impedanzring 3 gemäß Fig. 1, welcher vollständig aus einem Metall besteht.

Unter Faserverbundwerkstoffen, wie GFK oder CFK, sind glasfaserverstärkte Kunststoffe oder kohlefaserverstärkte Kunststoffe zu verstehen. Die akustische Impedanz von GFK liegt bei etwa 5,6 x 10⁵ g/cm²s und die von CFK bei etwa 4,7 x 10⁵ g/cm²s.

Der Impedanzring 3a gemäß Fig. 2 weist über seinen Umfang regelmäßig verteilt Durchgangsbohrungen 5 zur Aufnahme von Schrauben 9 auf, die auf der von dem Schwungradgehäuse 2 abgewandten Seite des Impedanzrings 3a in einer Bohrungserweiterung 6 enden. Der Durchmesser dieser Bohrungserweiterungen 6 ist so groß, dass der Schraubenkopf im verschraubten Zustand vollständig versenkt in dem Impedanzring 3a aufgenommen ist. Weiter weist das Schwungradgehäuse 2 Gewindebohrungen 12 auf, deren jeweilige Position mit den Positionen der Durchgangsbohrungen 5 in dem Impedanzrings 3a korrespondieren.

Zur Verbindung des Impedanzrings 3a mit dem Schwungradgehäuse 2 werden in einem ersten Montageschritt die Schrauben 9 in die Durchgangsbohrungen 5 im Impedanzrings 3a gesteckt und anschließend in den Gewindebohrungen 12 im Schwungradgehäuse 2 festgeschraubt.

Zum anschließenden Verschrauben des Impedanzrings 3a mit dem Getriebegehäuse 4 bzw. dessen Getriebeglocke 4a weist der Impedanzring 3a zwischen den dargestellten Gewindebohrungen 5 angeordnete weitere Durchgangsbohrungen auf, durch die Schrauben 11 von der Motorseite des Impedanzrings 3a eingesteckt und anschließend in Gewindebohrungen 10 in dem Getriebegehäuse 4 bzw. dessen Getriebeglocke 4a verschraubt werden. Damit zum Befestigen der weiteren Schrauben 11 ein Verschraubungswerkzeug an den jeweiligen Schraubenkopf angreifen kann, weist das Schwungradgehäuse 2 radiale Einbuchtungen an seinem Umfang auf, die ausreichend Platz für den jeweiligen Schraubenkopf und das Ansetzen eines diesbezüglichen Befestigungswerkzeuges lassen. Durch diese Konstruktion wird vorteilhaft erreicht, dass keine unmittelbare Schallwellenübertragung durch die Schrauben 9, 11 vom Schwungradgehäuse 2 auf das Getriebegehäuse 4 bzw. dessen Getriebeglocke 4a erfolgt.

### Bezugszeichen

- 1: Motorblock
- 2: Schwungradgehäuse
- 3: Impedanzring
- 3a: Impedanzring
- 4: Getriebegehäuse
- 4a: Getriebeglocke
- 5: Durchgangsbohrung im Impedanzring 3a
- 6: Bohrungserweiterung
- 7: Stahlschicht
- 8: GFK-Schicht, CFK-Schicht
- 9: Schraube
- 10: Gewindebohrung in der Getriebeglocke
- 11: Schraube
- 12: Gewindebohrung im Schwungradgehäuse

## Patentansprüche

1. Vorrichtung zur Beeinflussung der Körperschallleitungen und der Geräuschabstrahlungen an einem Antriebsstrang mit einer Brennkraftmaschine sowie mit einem damit verschraubten Getriebe, bei denen in einem Anlagebereich zwischen Motorblock (1) und Getriebegehäuse (4, 4a) ein Distanzkörper angeordnet ist, **dadurch gekennzeichnet, dass** der Distanzkörper als Impedanzring (3, 3a) mit tragender Funktion ausgebildet ist, wobei der Impedanzring (3, 3a) aus einem Material besteht, das gegenüber dem Material des Motorblocks (1) und/oder des Getriebegehäuse (4, 4a) einen großen Impedanzunterschied aufweist.

2. Vorrichtung nach Anspruch 1, **dadurch gekennzeichnet, dass** das Material des Impedanzrings (3, 3a) mindestens etwa die gleichen Festigkeitseigenschaften wie der Motorblock (1) und/oder das Getriebegehäuse (4) aufweist.

3. Vorrichtung nach Anspruch 1 oder 2, **dadurch gekennzeichnet, dass** der Impedanzring (3, 3a) aus einem Schwermetall mit mindestens den gleichen Festigkeitseigenschaften wie das Material des Motorblocks (1) und/oder das Material des Getriebegehäuse (4) hergestellt ist, wenn diese aus einer Leichtmetalllegierung bestehen.

4. Vorrichtung nach Anspruch 3, **dadurch gekennzeichnet, dass** der Impedanzring (3, 3a) aus Stahl oder Grauguss besteht, wenn der Motorblock (1) und/oder das Getriebegehäuse (4) aus einer Aluminiumlegierung bestehen.

5. Vorrichtung nach Anspruch 1 oder 2, **dadurch gekennzeichnet, dass** der Impedanzring (3a) aus einem Faserverbundwerkstoff wie GFK oder CFK besteht.

6. Vorrichtung nach Anspruch 1 oder 2, **dadurch gekennzeichnet, dass** der Impedanzring (3a) in Sandwichbauweise aus einer Abfolge von Schichten aus unterschiedlichen Materialien (7, 8) besteht.

7. Vorrichtung nach Anspruch 6, **dadurch gekennzeichnet, dass** der Impedanzring (3a) aus einer Abfolge von Schichten aus Stahl (7) und einem Faserverbundwerkstoff (8), wie GFK oder CFK, besteht.

8. Vorrichtung nach einem der vorherigen Ansprüche, **dadurch gekennzeichnet, dass** die axiale und/oder radiale Ausdehnung sowie das Elastizitätsmodul des Impedanzrings (3, 3a) an das im Betrieb akustisch wahrnehmbare Schwingungsspektrum des jeweils verwendeten Motorblocks (1) in der Weise angepasst ist, dass eine möglichst geringe Weiterleitung dieser Schwingungen in Richtung zum Getriebegehäuse (4, 4a) erfolgt.
